## Europäisches Patentamt

## European Patent Office

## Office européen des brevets

(11) Veröffentlichungsnummer: **0 170 088**
**B1**

(12) # EUROPÄISCHE PATENTSCHRIFT

(45) Veröffentlichungstag der Patentschrift:
**02.11.88**

(51) Int. Cl.⁴: **H 01 M 2/34,** H 01 M 10/42,
H 01 H 79/00, H 02 H 7/18

(21) Anmeldenummer: **85108245.3**

(22) Anmeldetag: **03.07.85**

(54) **Überbrückungselement.**

(30) Priorität: **17.07.84 DE 3426200**

(43) Veröffentlichungstag der Anmeldung:
**05.02.86 Patentblatt 86/6**

(45) Bekanntmachung des Hinweises auf die Patenterteilung:
**02.11.88 Patentblatt 88/44**

(84) Benannte Vertragsstaaten:
**AT BE FR GB IT NL**

(56) Entgegenhaltungen:
**EP-A-0 099 093**
**EP-A-0 129 035**
**DE-A-1 613 968**
**DE-A-2 819 584**
**US-A-3 213 345**
**US-A-4 252 869**

(73) Patentinhaber: **Asea Brown Boveri Aktiengesellschaft, Kallstadter Strasse 1, D-6800 Mannheim- Käfertal (DE)**

(72) Erfinder: **Petri, Günther Friedrich, Am Leimbachring 46, D-6902 Sandhausen (DE)**
Erfinder: **Ziegenbein, Botho, Dr., Eichendorffstrasse 4, D-6901 Neckarsteinach (DE)**

(74) Vertreter: **Kempe, Wolfgang, Dr., c/o BROWN, BOVERI & CIE AG ZPT Postfach 351, D-6800 Mannheim 31 (DE)**

## Beschreibung

Die Erfindung bezieht sich auf ein Überbrückungselement gemäß dem Oberbegriff des Patentanspruches 1.

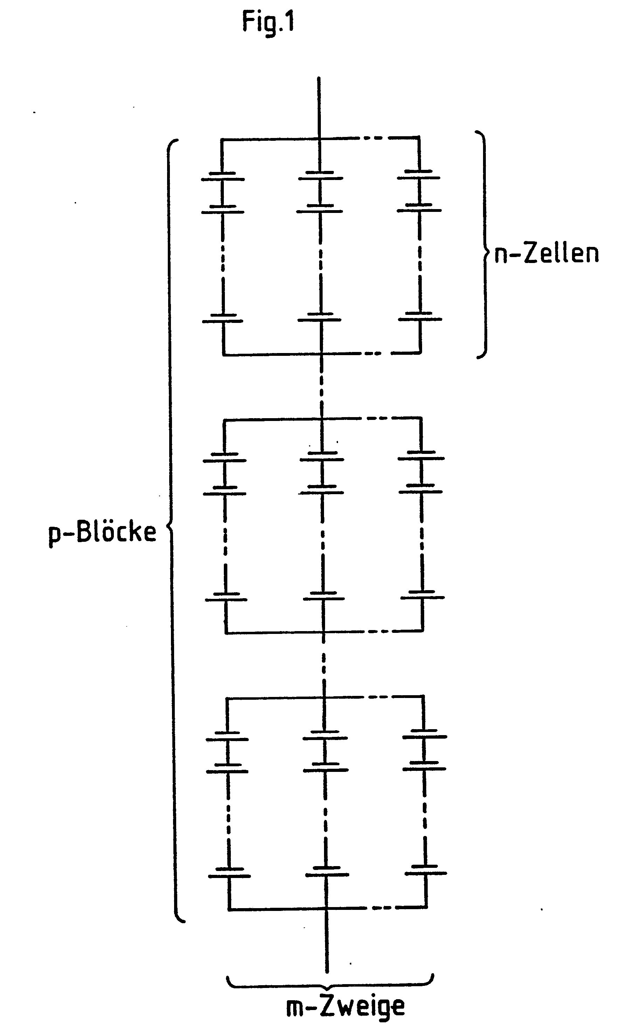

Solche Überbrückungselemente finden vor allem in Hochtemperaturbatterien eine Anwendung, die aus wiederaufladbaren elektrochemischen Speicherzellen aufgebaut sind. Sie dienen hier zur Überbrückung von Speicherzellen, deren Funktion gestört ist, und die deshalb aus dem Stromkreis der Hochtemperaturbatterie herausgetrennt werden müssen, damit die Kapazität der Batterie nicht wesentlich gemindert wird. Bei Hochtemperaturbatterien, die für Fahrzeuge verwendet werden, besteht die Notwendigkeit, viele elektrochemische Speicherzellen in Reihe und nur wenige parallel zu schalten. Gründe hierfür sind dadurch gegeben, daß der Energieinhalt einer solchen Batterie im allgemeinen kleiner als 40 kWh sein wird, der Energieinhalt einer einzelnen Speicherzelle ist jedoch größer als 80 Wh. Daraus folgt, daß eine Fahrzeugbatterie nicht mehr als 500 Speicherzellen beinhalten muß. Falls mit einer solchen Batterie bei einer Spannung der Einzelspeicherzelle von etwa 2 Volt insgesamt 200 Volt erzeugt werden sollen, müssen 100 Speicherzellen in Serie geschaltet werden. Das bedeutet, daß höchstens 5 Speicherzellen parallel geschaltet werden können. Da die Redundanz bei 5 parallel geschalteten Speicherzellen noch nicht sehr groß ist, ist es zweckmäßig möglichst viele Speicherzellen in Serie zu schalten. Derartige Zweige können dann parallel geschaltet werden, so daß sich das in Figur 1 dargestellte Schaltschema ergibt. Die Speicherzellen sind in dieser Zeichnung nur durch ihre elektrischen Anschlüsse dargestellt. Wie anhand dieser Zeichnung zu sehen ist, sind jeweils N-Speicherzellen zu einem Zweig serienartig zusammengeschaltet. M-Zweige mit jeweils N-Speicherzellen sind parallel geschaltet und bilden einen Block. Die gesamte Batterie ist aus p solchen seriengeschalteten Blöcken zusammengesetzt. Sie enthält dem gemäß in Figur 1 gezeigten Beispiel n x m x p Speicherzellen.

Probleme treten bei der beschriebenen Schaltung dann auf, wenn eine Speicherzelle einer Serienschaltung defekt wird. Bei Natrium/Schwefelspeicherzellen hat es sich gezeigt, daß ein Defekt meist dadurch auftritt, daß der Festelektrolyt Risse bekommt, so daß die Reaktionsstoffe Natrium und Schwefel chemisch miteinander direkt reagieren können, und von der Speicherzelle keine Spannung mehr abgegeben wird. Eine solche defekte Speicherzelle weist einen großen Innenwiderstand auf, der meist um mehr als einen Faktor 2 größer ist als der ohmsche Widerstand einer intakten Speicherzelle. Die Folge hiervon ist, daß durch den Zweig mit der defekten Speicherzelle nur ein sehr geringer oder kein Lade- oder Entladestrom fließt. Ist der Widerstand der defekten Speicherzelle sehr groß, so fällt der Zweig, in dem sich die defekte Speicherzelle befindet, vollständig für die Stromversorgung aus. Dies bedeutet, daß die Kapazität der Gesamtbatterie unter diesen Bedingungen um den Faktor (m-1)/m kleiner ist als diejenige einer intakten Batterie.

Aus der US-PS 3 213 345 ist ein Kurzschlußelement bekannt, das durch ein Halbleiterbauelement und eine Kontaktfeder gebildet wird, die in einem Gehäuse angeordnet sind. Das Gehäuse ist zylinderförmig ausgebildet und weist eine elektrisch leitende Grundfläche und ebensolche seitlichen Begrenzungsflächen auf. Mit der Grundfläche ist das Halbleiterbauelement elektrisch leitend verbunden. Die vorgespannte Kontakfeder steht über ein Lot mit der n-leitenden Schicht des Halbleiterbauelementes in Verbindung. Das zweite Ende der Kontaktfeder ist als elektrischer Anschlußpol aus dem Gehäuse heraus nach außen geführt. Kommt es zu einer Erwärmung des Halbleiterbauelementes, weil ein Strom durch das Kurzschlußelement fließt, so beginnt das Lot zu schmelzen, mit dem die Kontaktfeder mit dem Halbleiterbauelement verbunden ist. Die Kontaktfeder löst sich von dem Halbleiterbauelement und tritt in elektrisch leitenden Kontakt mit der seitlichen Begrenzungsfläche des Gehäuses, die elektrisch leitend mit der Grundfläche verbunden ist, an deren Außenseite der zweite elektrische Anschluß befestigt ist.

In der EP-OS-0 099 093 ist eine Schutzvorrichtung für Energiewandler beschrieben. Die Vorrichtung weist zwei Anschlußelektroden auf und ist als Zylinder ausgebildet. Im Inneren der Vorrichtung ist ein Überspannungsbegrenzungselement angeordnet, das in wärmeleitendem Kontakt mit einer Metallfläche steht. Kommt es zu einer Erwärmung des Überspannungsbegrenzungselementes so beginnt die Metallfläche zu schmelzen. Das flüssige Metall fließt in eine Rinne, die zwischen den beiden Elektroden angeordnet ist. Durch das sich in der Rinne sammelnde Metall wird eine elektrisch leitende Verbindung zwischen den beiden Elektroden ausgebildet.

Aus der DE-PS-3 117 385 ist ein Überbrückungselement bekannt, das für die Überbrückung einer einzelnen Speicherzelle vorgesehen ist. Das Überbrückungselement wird im wesentlichen durch zwei direkt aneinandergrenzende Räume gebildet. Der erste Raum ist mit einem Metall oder einer zersetzbaren Metallverbindung gefüllt. Das Metall muß bei der Betriebtemperatur der Speicherzelle flüssig und die Metallverbindung bei dieser Temperatur zersetzbar sein. Der zweite Raum des Überbrückungselements enthält die in einem definierten Abstand voneinander angeordneten Kontaktflächen von zwei Elektroden. Eine weitere Elektrode ist in dem Raum enthalten, in den das Metall bzw. die Metallverbindung gefüllt ist. Wird die Speicherzelle hochohmig, so kommt es zu einer Spannungsumkehr an ihren Elektroden und damit zu einer Spannungsumkehr an den Anschlußpolen des Überbrückungselementes. Hierdurch wird das in dem ersten Raum enthaltene Metall bzw. die Metallverbindung in den zweiten Raum transportiert. Ist dieser vollständig mit dem Metall bzw. der Metallverbindung gefüllt, so werden die beiden in diesem Raum angeordneten Elektroden durch den flüssigen Werkstoff elektrisch leitend verbunden, so daß der durch die Serienschaltung fließende Strom nun über das Überbrückungselement fließt. Nachteilig ist bei diesem Überbrückungselement, daß es zu aufwendig in seiner Konstruktion ist, und viel Platz beansprucht, der gerade in einer Hochtemperaturspeicherbatterie, die von einer thermischen Isolierung umgeben ist, nicht zur Verfügung steht.

Der Erfindung liegt deshalb die Aufgabe zugrunde ein Überbrückungselement für ein elektrisches Bauteil, insbesondere eine elektrochemische Speicherzelle zu schaffen, das in seinen Abmessungen klein dimensioniert ist, einen einfachen Aufbau aufweist, und zudem billig hergestellt werden kann.

Diese Aufgabe wird erfindungsgemäß durch die kennzeichnenden Merkmale des Patentanspruches 1 gelöst.

Erfindungsgemäß wird jedem elektrischen Bauteil das im Bedarfsfall überbrückt werden soll, ein solches Überbrückungselement parallel geschaltet. Bei Hochtemperaturspeicherbatterien, die aus Speicherzellen auf der Basis von Natrium und Schwefel aufgebaut sind, werden die beiden Anschlußelemente einer jeden Speicherzelle über ein solches Überbrückungselement miteinander verbunden.

Das Überbrückungselement ist so ausgebildet, daß bei einer intakten Speicherzelle, die in Serie mit weiteren Speicherzellen geschaltet ist, der Strom durch die Speicherzelle selbst fließt. Kommt es zu einer Störung innerhalb der Speicherzelle, beispielsweise zu einem Bruch des aus Betaaluminiumoxid gefertigten Festelektrolyten, der die beiden Reaktandenräume der Speicherzelle voneinander trennt, so wird selbige hochohmig und der Stromfluß durch die Speicherzelle unterbrochen. In einem solchen Fall wird der Strom dann vollständig von dem Überbrückungselement übernommen.

Bei einer Ausführungsform der Erfindung ist das Überbrückungselement so ausgebildet, daß es erst dann anspricht, wenn die Speicherzelle, zu der es parallel geschaltet ist, eine anhaltende Funktionsstörung aufweist. Beim normalen Funktionieren der Speicherzelle fließt in diesem Fall durch das Überbrückungselement nur ein sehr geringer Sperrstrom. Erfindungsgemäß kann das Überbrückungselement auch so ausgebildet sein, daß es auch schon dann anspricht, wenn die Speicherzelle auf ihre maximale Kapazität aufgeladen bzw. vollständig entladen ist. Eine vollständig aufgeladene Zelle wird hochohmig, d.h. durch sie fließt nur noch ein sehr kleiner Strom. Dies bedeutet, daß bei einer Serienschaltung von Speicherzellen der Stromfluß durch die Reihenschaltung unterbrochen wird. Noch nicht vollständig aufgeladene Speicherzellen werden nicht mehr weiter geladen werden, so daß hierdurch die gesamte Kapazität der Speicherzellen dieser Reihenschaltung niedriger ist als die andere Serienschaltungen. Durch das erfindungsgemäße Überbrückungselement wird die Speicherzelle beim Erreichen ihrer maximalen Aufladung so lange überbrückt, bis alle Speicherzellen der Serienschaltung aufgeladen sind. Eine solche Überbrückung ist auch dann möglich und sinnvoll, wenn die Speicherzelle soweit entladen ist, daß ihre Spannung den Wert null erreicht hat. Wird der Stromkreis durch die Speicherzelle dann ebenfalls durch das Überbrückungselement überbrückt, so wird das Fließen eines Kurzschlußstromes durch die Speicherzelle vermieden. Insbesondere wird durch die Überbrückung verhindert, daß der Speicherzelle von außen ein Strom aufgezwungen wird, der die Umpolung der Speicherspannung bewirkt, so daß diese negativ wird.

Erfindungsgemäß wird das Überbrückungselement durch ein Halbleiterbauelement gebildet, daß über wenigstens zwei elektrisch leitende teilweise als Federn ausgebildete Bauteile elektrisch leitend mit einem elektrischen Anschlußpol des Überbrückungselementes verbunden ist. Jedem Bauelement, insbesondere jeder elektrochemischen Speicherzelle wird ein solches Überbrückungselement parallel geschaltet. Die Überbrückungselemente werden zusammen mit den Speicherzellen innerhalb der Batterie angeordnet, die nach außenhin durch eine thermische Isolierung begrenzt ist. Im Innenraum der Batterie herrscht eine Temperatur von 350°C, was der Arbeitstemperatur der Speicherzellen entspricht. Beim Hochohmigwerden einer Speicherzelle fließt der gesamte Strom der Reihenschaltung durch das Überbrückungselement, insbesondere durch sein Halbleiterbauelement. Hierdurch wird die Temperatur innerhalb des Überbrückungselements um 570° und wesentlich mehr erhöht, so daß die Glaskapselung des Halbleiterbauelements zu schmelzen beginnt. Bei einer Ausführungsform ist das Halbleiterbauelement über ein scheibenförmiges Bauteil und eine Kontaktfeder mit einem ersten Anschlußelement verbunden. Das Halbleiterbauelement sitzt in elektrisch leitender Verbindung auf der Innenfläche eines Gehäuses auf. Das erste Ende der Kontaktfeder drückt gegen das zwischen ihm und dem Halbleiterbauelement angeordneten Bauteil. Das zweite Ende der Kontaktfeder ist durch die Gehäusewand isoliert nach außen geführt und dort mit dem ersten Anschlußelement des Überbrückungselementes verbunden. An der Außenfläche des metallischen Gehäuses ist das zweite elektrische Anschlußelement des Überbrückungselementes befestigt. Auf Grund des Temperaturanstiegs innerhalb des Überbrückungselements beginnt auch das scheibenförmige Bauteil zu schmelzen, so daß es zusammen mit dem Halbleiterbauelement ein Kurzschlußelement bildet. Die elektrische Verbindung zwischen diesem Kurzschlußelement und dem elektrischen Anschlußpol wird weiterhin durch die Kontaktfeder gebildet.

Bei einer anderen Ausführungsform der Erfindung ist das Halbleiterbauelement mit seinem ersten Anschlußpol über eine Kontaktfeder und zusätzlich über eine Tellerfeder mit der elektrisch leitenden Innenfläche eines Gehäuses verbunden, innerhalb dessen das Halbleiterbauelement angeordnet ist. Dieser ersten inneren Begrenzungsfläche des Gehäuses liegt eine zweite ebenfalls elektrisch leitende Begrenzungsfläche gegenüber, mit welcher das Halbleiterbauelement direkt verbunden ist. Zwischen den beiden elektrisch leitenden Begrenzungsflächen sind zwei isolierende Begrenzungsflächen angeordnet, so daß ein geschlossenes Gehäuse gebildet wird. An der Außenfläche der ersten elektrisch leitenden Begrenzungsfläche ist der erste Anschlußpol und an der zweiten elektrisch leitenden Wand der zweite elektrische Anschlußpol des Überbrückungselementes befestigt. Fließt der gesamte Strom, der normalerweise durch die Speicherzelle fließt, durch dieses Überbrückungselement, so wird die Temperatur im Halbleiterbauelement so stark erhöht, daß die Glaskapselung des Halbleiterbauelements zu schmelzen beginnt. Dadurch wird die Spannung der Federn reduziert. Aufgrund der sich nun ausdehnenden Tellerfeder, wird die Kontaktfeder in Richtung auf das Halbleiterbauelement gedrückt bis sie auf einem in das Innere des Gehäuses hineinragenden Stift aufliegt, der elektrisch leitend mit der zweiten metallischen Begrenzungsfläche verbunden ist. Damit ist eine niederohmige Verbindung zwischen den beiden Gehäusewandungen, insbesondere den beiden an ihnen befestigten Anschlußelementen des Überbrückungselementes gebildet.

Die zur Fertigung der Überbrückungselemente verwendeten Halbleiterbauelemente können beispielsweise als Zenerdioden ausgebildet sein.

Werden als Halbleiterbauelemente Siliziumdioden verwendet, so sind diese bei der normalen Funktionsweise der Speicherzelle so gepolt, daß durch sie nur ein kleiner Sperrstrom fließt. Wird die Speicherzelle hochohmig und kommt es an ihren Anschlußelementen zu einer Spannungsumkehr, so wird das Halbleiterbauelement in Durchlaßrichtung gepolt, so daß der gesamte Strom von dem Überbrückungselement übernommen werden kann.

Um den Sperrstrom bei erhöhten Batterietemperaturen zu erniedrigen, ist es jedoch besser ein Halbleiterelement aus Galliumarsenid oder Galliumsphosphid zu verwenden.

Die Erfindung wird nachfolgend anhand von Zeichnungen erläutert.

Es zeigen:

Figur 1: Den schematischen Schaltungsaufbau einer Hochtemperaturspeicherbatterie,
Figur 2: ein erfindungsgemäßes Überbrückungselement,
Figur 3: eine Variante des Überbrückungselements,
Figur 4: die Serienschaltung von mehreren Speicherzellen, von denen jede mit einem Überbrückungselement ausgerüstet ist.

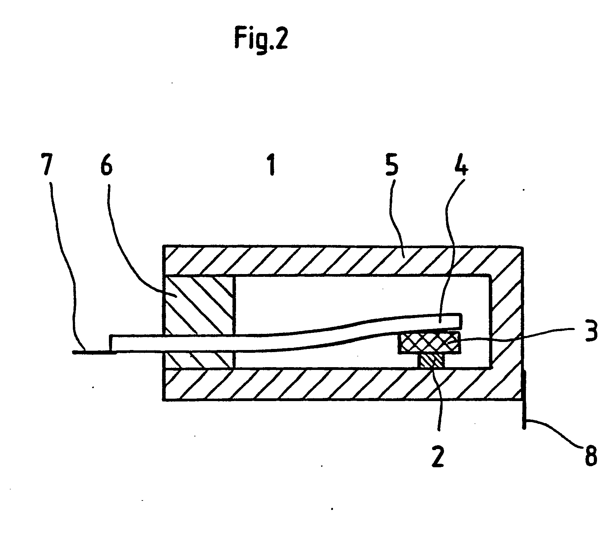

Das in Figur 2 dargestellte Überbrückungselement 1 wird im wesentlichen durch ein Halbleiterbauelement 2, ein scheibenförmiges Bauteil 3 und eine Kontaktfeder 4 gebildet. Begrenzt wird das Überbrückungselement 1 nach außenhin durch ein metallisches Gehäuse 5, das becherförmig ausgebildet ist. Das Halbleiterbauelement 2 ist als Siliziumdiode oder als Zenerdiode ausgebildet. Es ist auf der Innenfläche des metallischen Gehäuses 5 angeordnet, und direkt elektrisch leitend mit diesem verbunden. Der zweite elektrische Anschluß des Halbleiterbauelementes 2 steht über das scheibenförmige Bauteil 3 mit der Kontaktfeder in Verbindung. Dieses ist aus einer Schmelzlegierung, beispielsweise aus einer Aluminiumlegierung, gefertigt. Auf der Oberfläche des scheibenförmigen Bauteils 3 ist das erste Ende der Kontaktfeder 4 so angeordnet, daß eine elektrisch leitende Verbindung zwischen dem Bauteil 3 und selbigem besteht. Die Kontaktfeder 4 ist so installiert, daß ihr erstes Ende fest gegen die Oberfläche des scheibenförmigen Bauteils 3 drückt. Insbesondere ist die Kontaktfeder 4 in vorgespanntem Zustand innerhalb des Gehäuses 5 angeordnet. Das zweite Ende der Kontaktfeder 4 ist durch einen Verschluß 6 hindurch nach außen geführt. Der Verschluß 6 ist aus einem isolierenden Material gefertigt, das gegenüber Temperaturen von 580° und mehr beständig ist. Das zweite Ende der Kontaktfeder steht nach außen über und ist mit dem ersten Anschlußelement 7 des Überbrückungselements elektrisch leitend verbunden. Das Anschlußelement 7 wird beispielsweise durch einen stabförmigen Leiter gebildet. Das zweite Anschlußelement 8 des Überbrückungselementes 1 wird ebenfalls durch einen stabförmigen Leiter gebildet, der elektrisch leitend mit der Außenfläche des Gehäuses 5 verbunden ist. Wird von diesem Überbrückungselement 1 der gesamte Strom, der normalerweise durch die Speicherzelle fließt, übernommen, so bewirkt dieser zumindest im Bereich des Halbleiterbauelementes 2 und des scheibenförmigen Bauteil 3 eine Temperaturerhöhung die mindestens 570° C und mehr beträgt.

Aufgrund dieser Temperaturerhöhung beginnt die Glaskapselung um das Halbleiterbauelement und das Bauteil 3 zu schmelzen. Gleichzeitig wird das Halbleiterbauelement 2 von der Kontaktfeder 4 in das Bauteil 3 gedrückt, so daß die Kontaktfeder über das so gebildete Kurzschlußelement mit der Begrenzungsfläche verbunden ist, womit eine niederohmige elektrisch leitende Verbindung zwischen den Anschlußelementen 7 und 8 des Überbrückungselementes gebildet wird.

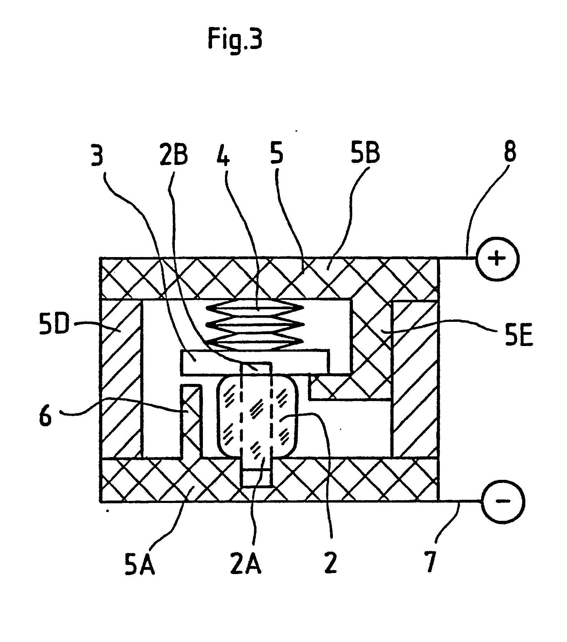

Figur 3 zeigt eine Variante des Überbrückungselements 1, das im wesentlichen durch ein Halbleiterbauelement 2 eine Kontaktfeder 3 und eine Tellerfeder 4 gebildet wird. Das Halbleiterbauelement 2 ist innerhalb eines quaderförmigen Gehäuses 5 angeordnet. Dieses weist zwei einander gegenüber liegende elektrisch leitende Begrenzungswände 5A und 5B auf, während die übrigen Begrenzungswände 5D und 5E aus einem isolierenden Material gefertigt sind. Das Halbleiterbauelement ist mit seinem ersten Anschlußpol direkt mit der elektrisch leitenden Begrenzungsfläche 5A verbunden. Sein Anschlußpol 2A ist elektrisch leitend in eine Vertiefung der Begrenzungsfläche 5A eingesetzt. Der zweite Anschlußpol 2B des Halbleiterbauelements ist elektrisch leitend in eine Ausnehmung der Kontaktfeder 3 eingesetzt. Der äußere Rand der scheibenförmigen Kontaktfeder 3 steht mit einem in den Innenraum des Gehäuses 5 hineinragenden hakenförmig ausgebildeten Arm 5F der zweiten elektrisch leitenden Begrenzungsfläche 5B des Gehäuses 5 in Verbindung. Zwischen der Oberfläche der scheibenförmigen Kontaktfeder 3 und der Innenfläche der Begrenzungsfläche 5B ist die Tellerfeder 4 in gespanntem Zustand angeordnet. Durch die oben beschriebenen Maßnahmen ist der Anschlußpol 2B des Halbleiterbauelements 2 mit der elektrisch leitenden Begrenzungsfläche 5B zum einen über die Kontaktfeder 3 und den Arm 5F und zum anderen über die Kontaktfeder 3 und die Tellerfeder 4 elektrisch leitend verbunden. Parallel zu der Begrenzungsfläche 5D verläuft ein Stift 6, der in den Innenraum des Gehäuses 5 ragt und elektrisch leitend mit der Begrenzungsfläche 5A verbunden ist. Der Stift 6 ist soweit in den Innenraum hineingeführt, daß er in geringem Abstand von der Kontaktfeder 4 endet. Das erste elektrisch leitende Anschlußelement 7 ist mit der Begrenzungsfläche 5A des Gehäuses 5 verbunden. Es wird bei dem hier dargestellten Ausführungsbeispiel durch einen stabförmigen Leiter gebildet. Das zweite elektrische Anschlußelement 8 ist an der Außenseite der Begrenzungsfläche 5B befestigt und wird ebenfalls durch einen stabförmigen Leiter gebildet.

Wird der gesamte, durch eine Speicherzelle fließende Strom von diesem Überbrückungselement übernommen, so kommt es auch hierin, insbesondere im Bereich des Halbleiterbauelements 2 zu einer Temperaturerhöhung auf Werte von 570° C und mehr, woraufhin die Glaskapselung des Halbleiterbauelements zu schmelzen beginnt. Die Festigkeit der Glaskapselung durch welche die Tellerfeder in ihrem gespannten Zustand zwischen der Kontaktfeder 3 und der Begrenzungsfläche 5B gehalten wird, nimmt ab. Aufgrund der sich entspannenden Tellerfeder 4 wird die Kontaktfeder 3 in Richtung auf den Stift 6 gedrückt, bis sie auf der Oberfläche desselben aufliegt. Hierdurch wird eine elektrisch leitende, niederohmige Verbindung zwischen der elektrisch leitenden Begrenzungsfläche 5A und der ebenfalls elektrisch leitenden Begrenzungsfläche 5B gebildet.

Bei den beiden in den Figuren 2 und 3 beschriebenen Ausführungsformen besteht die Möglichkeit, die verwendeten Halbleiterbauelemente 2 als Zenerdioden auszubilden, so daß das Überbrückungselement den Strom durch die Speicherzelle nicht nur dann übernimmt, wenn die Speicherzelle defekt ist, sondern auch dann, wenn die Speicherzelle auf ihre maximale Kapazität aufgeladen bzw. ihre Spannung den Wert Null erreicht hat. Vorzugsweise werden Zenerdioden verwendet, deren Nennspannung der maximalen Ladespannung der Speicherzellen entspricht, und deren Durchlaß-Spannung sehr sehr klein ist, so daß das Überbrückungselement beim Vorliegen der oben genannten Bedingungen auch zeitweilig den Strom übernehmen kann.

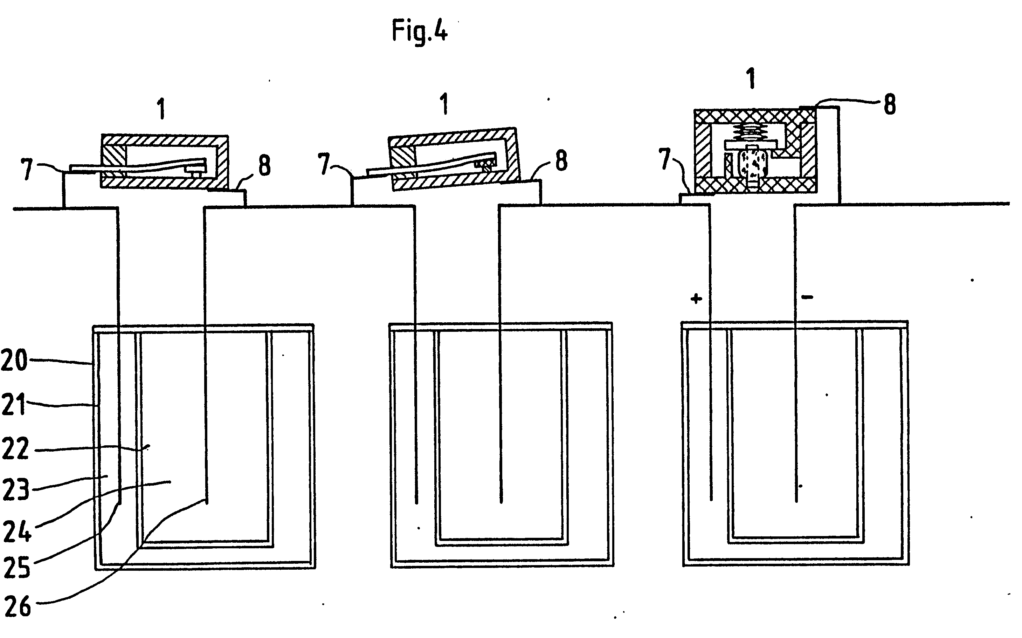

In Figur 4 sind drei in Reihe geschaltete Speicherzellen 20 dargestellt. Jeder Speicherzelle 20 ist ein Überbrückungselement 1 parallel geschaltet. Zwei der Speicherzellen 20, sind mit je einem Überbrückungselement ausgerüstet, das in Figur 2 dargestellt und in der dazugehörigen Beschreibung näher erläutert ist, während die dritte Speicherzelle 20 mit dem in Figur 3 dargestellten und in der dazugehörigen Beschreibung erläuterten Überbrückungselement 1 verbunden ist. Beide Ausführungsformen sind gleichwertig, und können bei Bedarf in der Weise, wie in Figur 3 dargestellt, benutzt werden. Jede Speicherzelle 20 ist nach außenhin von einem metallischen becherförmigen Gehäuse 21 begrenzt. Innerhalb desselben ist ein ebenfalls becherförmiger Festelektrolyt 22 aus Betaaluminiumoxid angeordnet. Zwischen dem Festelektrolyten 22 und dem metallischen Gehäuse 1 ist bei den hier dargestellten Ausführungsformen der Kathodenraum 23 angeordnet, während sich im Inneren des Festelektrolyten 22 der Anodenraum 24 befindet. Dieser ist mit Natrium (hier nicht dargestellt) ausgefüllt. Innerhalb des Kathodenraums 23 befindet sich der als zweiter Reaktand dienende Schwefel (hier nicht dargestellt). In jeden Reaktandenraum 23, 24 ragt ein Stromabnehmer 25, 26. Mit dem Stromabnehmer 25 ist das jeweilige Anschlußelement 7 und mit dem Stromabnehmer 26 das jeweilige Anschlußelement 8 des Überbrückungselements elektrisch leitend verbunden. Solange die Speicherzellen 20 voll funktionsfähig sind, fließt der Strom durch diese hindurch. Die Überbrückungselemente 1 sind wie bereits oben erwähnt, so installiert, daß bei voller Funktionsfähigkeit der Speicherzelle durch sie nur ein sehr sehr kleiner Sperrstrom fließt. Sind die in den Überbrückungselementen 1 enthaltenen Halbleiterbauelemente 2 als Zenerdioden ausgebildet, so können die Überbrückungselemente den Strom auch dann übernehmen, wenn die Speicherzelle voll aufgeladen bzw. voll entladen ist. Diese Stromübernahme ist jedoch nur kurzzeitig. Erst beim Auftreten eines Defektes innerhalb der Speicherzelle 20 wird der Stromkreis dauerhaft durch das Überbrückungselement 1 überbrückt.

**Patentansprüche**

1. Überbrückungselement mit einem Halbleiterbauelement (2), das elektrisch leitend auf der Innenfläche eines Gehäuses (5) angeordnet ist, an dessen Außenflächen zwei elektrische Anschlußpole (7) befestigt sind, und in dessen Inneren eine vorgespannte Kontaktfeder (4) installiert ist, deren zweites Ende aus dem Gehäuse isoliert herausgeführt und mit dem ersten Anschlußpol (7) zur Überbrückung eines elektrischen Bauteils, insbesondere einer wiederaufladbaren elektrochemischen Speicherzelle (20) verbunden ist, dadurch gekennzeichnet, daß das Halbleiterbauelement (2) über ein scheibenförmiges Bauteil (3) aus Aluminium oder einer Aluminiumlegierung elektrisch leitend mit der vorgespannten Kontaktfeder in Verbindung steht, und daß das Bauteil (3) bei einer Temperaturerhöhung von 570°C und mehr mit dem Halbleiterbauelement (2) zu einem niederohmigen Kurzschlußelement zusammengefügt ist.

2. Überbrückungselement mit einem Halbleiterbauelement (2), das elektrisch leitend auf der Innenfläche eines Gehäuses (5) angeordnet ist, an dessen Außenflächen zwei Anschlußpole (7, 8) befestigt sind, und in dessen Innerem eine vorgespannte Kontaktfeder (4) zur Überbrückung eines elektrischen Bauteils, insbesondere einer wiederaufladbaren elektrochemischen Speicherzelle (20) installiert ist, dadurch gekennzeichnet, daß das Gehäuse (5) zwei elektrisch leitende Begrenzungsflächen (5A, 5B) aufweist, die einander gegenüberliegend angeordnet sind, daß das als Zenerdiode oder als Siliziumdiode ausgebildete Halbleiterbauelement (2) mit der ersten Begrenzungsfläche (5A) direkt und mit der zweiten Begrenzungsfläche (5B) zum einen über die Kontaktfeder (3) und zum anderen über die Kontaktfeder (3) und eine Tellerfeder (4) verbunden ist, daß der Rand der Kontaktfeder (3) bereichsweise auf einem in den Innenraum des Gehäuses (5) weisenden hakenförmig gebogenen Arm (5E) der zweiten Begrenzungsfläche (5B) aufliegt, daß der erste Anschlußpol (2B) des Halbleiterbauelementes (2) in eine Ausnehmung der Kontaktfeder (3) und der zweite Anschlußpol (2A) des Halbleiterbauelementes (2) in eine Ausnehmung der ersten Begrenzungsfläche (5A) eingesetzt ist, und daß ein mit der ersten Begrenzungsfläche (5A) verbundener elektrisch leitender Stift (6) in den Innenraum des Gehäuses (5) ragt und in geringem Abstand unterhalb von der Kontaktfeder (3) endet.

**Claims**

1. Shunting element containing a semi-conductor component (2) which is arranged in an electrically conducting manner on the inside surface of a housing (5) to the outside surfaces of which two electrical connecting terminals (7) are attached and in whose interior a preloaded contact spring (4) is installed whose second end passes out of the housing in an insulating manner and is connected to the first connecting terminal (7) for shunting an electrical components in particular a rechargeable electrochemical storage cell (20), characterized in that the semi-conductor component (2) is in electrically conducting contact with the preloaded contact spring via a disc-shaped component (3) composed of aluminium or an aluminium alloy, and in that the component (3) is joined to the semi-conductor component (2) to form a low-resistant short-circuit element for a temperature increase of 570°C and over.

2. Shunting element containing a semi-conductor component (2) which is arranged in an electrically conducting manner on the inside surface of a housing (5), to the outside surfaces of which two connecting terminals (7, 8) are attached, and in whose interior a preloaded contact spring (4) is installed for shunting an electrical component, in particular a rechargeable electrochemical storage cell (20), characterized in that the housing (5) has two electrically conducting boundary surfaces (5A, 5B) which are arranged opposite each other, in that a semiconductor component (2) constructed as a zener diode or a silicon diode is connected to the first boundary surface (5A) directly and to the second boundary surface (5B), on the one hand, via the contact spring (3) and, on the other hand, via the contact spring (3) and a cup spring (4), in that the edge of the contact spring (3) rests regionally on an arm (5E), which points into the interior of the housing (5) and is bent in the form of a hook, of the second boundary surface (5B), in that the first connecting terminal (2B) of the semi-conductor component (2) the second connecting terminal (2A) of the semi-conductor component (2) is inserted in a recess in the first boundary surface (5A), and in that a pin (6) connected in an electrically conducting manner to the first boundary surface (5A) projects into the interior of the housing (5) and ends at a short distance below the contact spring (3).

## Revendications

1. Elément de pontage comportant un composant semiconducteur (2) qui est disposé avec liaison électrique sur la surface intérieure d'un boîtier (5) sur les surfaces extérieures duquel sont fixés deux pôles électriques de raccordement (7) et à l'intérieur duquel est installé un ressort de contact (4) prétendu dont la deuxième extrémité est sortie de façon électriquement isolée du boîtier et est reliée au premier pôle de raccordement (7) pour ponter un composant électrique, en particulier un élément accumulateur (20) électrochimique rechargeable, caractérisé en ce que l'élément semiconducteur (2) est en liaison électrique avec le ressort de contact prétendu par l'intermédiaire d'une pièce en forme de disque (3) en aluminium ou en un alliage d'aluminium et en ce que la pièce (3) forme avec le composant semiconducteur (2), en cas d'élévation de la température à 570° C et plus, un élément de court-circuitage de basse impédance.

2. Elément de pontage comportant un composant semiconducteur (2) qui est disposé avec liaison électrique sur la surface intérieure d'un boîtier (5) sur les surfaces extérieures duquel sont fixés deux pôles de raccordement (7, 8) et à l'intérieur duquel est installé un ressort de contact (4) prétendu pour ponter un composant électrique, en particulier un élément accumulateur (20) électrochimique rechargeable, caractérisé en ce que le boîtier (5) présente deux surfaces de délimitation électroconductrices (5A, 5B) qui se font face, en ce que le composant semiconducteur (2) réalisé sous forme de diode Zener ou de diode au silicium est relié à la première surface de délimitation (5A) directement, et à la deuxième surface de délimitation (5B) par l'intermédiaire, d'une part, du ressort de contact (3) et d'autre part, du ressort de contact (3) et d'une rondelle Belleville (4), en ce que le bord du ressort de contact (3) prend appui par zones sur un bras (5E) de la deuxième surface de délimitation (5B), courbé en forme de crochet et orienté vers l'intérieur du boîtier (5), en ce que le premier pôle de raccordement (2B) du composant semiconducteur (2) est placé dans un évidement du ressort de contact (3) et le deuxième pôle de raccordement (2A) du composant semiconducteur (2) dans un évidement de la première surface de délimitation (5A) et en ce qu'une broche électroconductrice (6) reliée à la première surface de délimitation (5A) fait saillie à l'intérieur du boîtier (5) et se termine au-dessous du ressort de contact (3), à une faible distance de ce dernier.

## Fig.1

}n-Zellen

p-Blöcke {

m-Zweige

Fig.2

Fig.3

Fig.4